**Europäisches Patentamt**

**European Patent Office**

**Office européen des brevets**

(19)

(11) Veröffentlichungsnummer: **0 257 447**
**B1**

(12) # EUROPÄISCHE PATENTSCHRIFT

(45) Veröffentlichungstag der Patentschrift:
**11.04.90**

(51) Int. Cl.⁴: **B65G 57/24**, B65G 27/24

(21) Anmeldenummer: **87111657.0**

(22) Anmeldetag: **12.08.87**

(54) Sackpalettierer.

(30) Priorität: **16.08.86 DE 3627821**

(43) Veröffentlichungstag der Anmeldung:
**02.03.88 Patentblatt 88/9**

(45) Bekanntmachung des Hinweises auf die Patenterteilung:
**11.04.90 Patentblatt 90/15**

(84) Benannte Vertragsstaaten:
**AT BE CH DE ES FR GB LI NL SE**

(56) Entgegenhaltungen:
**DE-B- 1 231 621**
**DE-U- 8 220 884**
**FR-A- 2 453 803**
**GB-A- 1 472 664**
**US-A- 2 971 659**

(73) Patentinhaber: **MEYPACK Verpackungs- und Palettiertechnik GmbH, Industriestrasse 1, D-4405 Nottuln 2(DE)**

(72) Erfinder: **Düring, Klaus, An den Baumzäunen 9, D-6701 Gönnheim(DE)**

(74) Vertreter: **Habbel, Hans-Georg, Dipl.-Ing., Postfach 3429 Am Kanonengraben 11, D-4400 Münster(DE)**

**Beschreibung**

Die Erfindung bezieht sich auf einen Sackpalettierer.

Es ist aus dem DE-GM 82 20 884.0 eine Vorrichtung zum automatischen Palettieren von Säcken bekannt mit Mitteln zum Fördern, Wenden und Speichern der Säcke mit einem Ladetisch sowie mit einem Magazin für Leerpaletten und einer Palettentransporteinrichtung.

Bei der bekannten Einrichtung gelangen die Säcke über eine Fördereinrichtung zu einer Sackwendung, auf der sie um 90° zur Förderrichtung verdreht werden können. In Förderrichtung hinter dieser Sackwendung ist ein Sackspeicher angeordnet, in dem ein quergewendeter Sack gegen einen Anschlag läuft und dort festgehalten wird. Ein zweiter, ebenfalls quer zur Förderrichtung gewendeter Sack stößt gegen diesen ersten Sack in dem Speicher, der mit einer Umlenkeinrichtung zusammenwirkt.

90° zur bisherigen Förderrichtung verläuft die Richtung, in der die beiden Säcke vom ersten Sackspeicher zu einem Ladetisch gefördert werden, der gleichzeitig als zweiter Sackspeicher ausgebildet ist. Auch hier werden die Säcke durch einen Anschlag abgebremst und festgehalten. Ein dritter Sack, der nicht gewendet wird, in der Umlenkeinrichtung jedoch ebenfalls eine Richtungsänderung von 90° erfährt, stößt in dem zweiten Sackspeicher gegen die beiden schon dort liegenden Säcke und vervollständigt eine komplette Sacklage, indem er zu den beiden ersten Säcken im Verbund liegend angeordnet ist.

Die bekannte Einrichtung weist den Nachteil auf, daß die Säcke einer Vielzahl von stoßenden oder stauchenden Einflüssen unterworfen werden, bei der die Sackform negativ beeinflußt wird. Aus diesem Grund ist zwischen der Umlenkstation bzw. dem ersten Sackspeicher und dem Ladetisch bzw. dem zweiten Sackspeicher eine Glättungseinrichtung vorgesehen, die die Säcke auf eine Sollform bringen soll, jedoch ist nach dieser Glättungseinrichtung eine weitere Stauchung der Säcke unvermeidlich, so daß die Form der Säcke, wenn sie auf einer Palette abgeladen werden, nicht den Erfordernissen entspricht.

Um eine gute Festigkeit des aufpalettierten Stapels zu erreichen, ist einerseits eine zunächst gleichmäßige Form der einzelnen Säcke erforderlich und weiterhin ist eine Form einer gesamten Sacklage erwünscht, bei der die Außenränder der Sacklage leicht verdickt ausgebildet sind. Durch die Tatsache, daß die auf einer solchen Sacklage abgelegte nächste Sacklage das Bestreben hat, von außen nach innen auf der unteren Sacklage zu rutschen, verdichtet sich ein solcher Stapel von selbst und hat das geringste Bestreben, auseinanderzufallen. Eine ebene Oberfläche eines Sackstapels ist ebenfalls ein Anzeichen für eine noch relativ gute Festigkeit eines derartigen Stapels. Eine konvexe, also kissenartig oder ballig in der Mitte erhöhte Oberfläche eines Sackstapels ist jedoch ein Zeichen dafür, daß die Tendenz der Säcke, auseinanderzufallen, hier am größten ist. Ein solcher Sackstapel weist die schlechteste Festigkeit und damit auch die schlechtesten Voraussetzungen für einen sicheren Transport auf.

Die gewünschte Verdickung an den Außenseiten einer Sacklage kann durch ein gezieltes Stauchen dieser Außenseiten erreicht werden. Nachteilig ist jedoch, wenn auch im inneren Bereich einer Sacklage die Säcke an ihren Kanten gestaucht werden, da dann auch in diesem Bereich Verdickungen auftreten, die zu einer balligen Form der Sacklage, also zu einer in der Mitte erhöhten oder kissenartig verdickten Form der Sacklage führen. Dadurch, daß bei der bekannten Anlage in den beiden Sackspeichern Säcke aneinanderstoßen und daß bei der Übergabe der Säcke vom Ladetisch auf die Palette die Säcke aneinandergedrückt werden, wenn sie z. T. an einem Anschlag anliegen und unter ihnen der Ladetisch verfahren wird, ergeben sich zwangsläufig Stauchzonen und Verdickungen an den Kanten aneinander anstoßender Säcke im mittleren Bereich einer Sacklage.

Weiterhin nachteilig ist bei der bekannten Einrichtung, daß sich die Palette nach jedem Ladevorgang um die Höhe einer Sacklage absenkt. Dadurch ist die Anordnung der gesamten restlichen Anlage auf einem Höhenniveau erforderlich, das zumindest der Höhe einer komplett bepackten Palette entspricht. Diese hohe Anordnung der verschiedenen Anlagenteile macht nicht nur einen größeren baulichen Aufwand erforderlich, sondern erhöht auch die Schwierigkeiten und die Unfallgefahr bei der Überwachung, der Wartung und der Reparatur der einzelnen Anlagenteile.

Eine gattungsbildende Einrichtung wird in der US-A 2 971 659 beschrieben. Bei dieser bekannten Einrichtung wird eine hohe Palettiergeschwindigkeit angestrebt, so daß auf eine schonende Behandlung der Säcke nicht abgestellt wird. Daher sind eine Vielzahl von Anschlägen und Schiebern vorgesehen. Um die erforderliche Stabilität der Säcke auf der Palette zu erreichen, sind Klebstoffrollen vorgesehen, die die Säcke an ihrer Unterseite bestreichen. Die Anlage befindet sich nicht auf Flurniveau, sondern die Anlage muß wenigstens so hoch über dem Flurniveau angeordnet sein, wie es der Höhe eines vollständigen Sackstapels plus der Palette entspricht. Hiermit wird die Zugänglichkeit zur Anlage erschwert.

Aus der FR-A 2 453 803 ist zwar auch ein Hubgerüst mit einem Ladetisch bekannt, aber auch hier werden die Säcke nicht besonders schonend behandelt.

Aus der DE-B 1 231 621 ist zwar eine Wende oder Umlenkanordnung bekannt, aber es wird keine stauchdrucklose Förderung der Säcke bei gleichzeitiger guter Festigkeit des Sackstapels beschrieben.

Der Erfindung liegt die Aufgabe zugrunde, eine möglichst stauchdrucklose Förderung von Säcken zu erreichen sowie eine gute Festigkeit des Sackstapels auf der Palette, wobei die Anlage zur automatischen Palettierung der Säcke zu Beaufsichtigungs-, Wartungs- und Reparaturzwecken gut zugänglich ausgebildet sein soll.

Diese der Erfindung zugrundeliegende Aufgabe wird durch die kennzeichnenden Merkmale des Anspruches 1 gelöst.

So bietet die Anordnung der einzelnen Komponenten der Palettieranlage auf Flurniveau eine gute Zugänglichkeit zu Überwachungs-, Wartungs- und Reparaturarbeiten. Eine lineare Anordnung der einzelnen Anlagenteile hintereinander ohne eine Abweichung in der Förderrichtung der Säcke verringert die stauchenden, stoßenden oder schiebenden Einflüsse von außen auf die Säcke.

Eine Rollenbahn mit angetriebenen Rollen zum Transport der Säcke ermöglicht einerseits die Verringerung von stauchenden oder stoßenden Einflüssen auf die Säcke durch die Verwendung von Betätigungseinrichtungen für die Säcke, welch zwischen den einzelnen Rollen die Säcke anheben und manipulieren können, so daß die Verwendung von oberhalb der Fördereinrichtung angeordneten Anschlägen oder Schiebern überflüssig wird.

Insbesondere im Bereich der Wendemöglichkeit, der Querverteilung und des Speicherns der Säcke können diese Hebeeinrichtungen Anschläge, Schieber od. dgl. ersetzen.

Mehrere der Hebevorrichtungen im Bereich des Sackspeichers, die mit Sensoren zusammenwirken, können verhindern, daß die Säcke, die im Sackspeicher zu einer Sacklage zusammengestellt werden sollen, an einem Anschlag anliegen. Dazu heben sie, sobald ein Sack über die Anhebevorrichtung gelangt, diesen Sack aus dem Eingriff der angetriebenen Rollen heraus.

Die Verwendung eines Hubgerüstes ermöglicht es, die Sacklagen hochzuheben und auf die schon bestehenden Sacklagen einer Palette aufzugeben, so daß die Anlage zur Sackpalettierung im wesentlichen auf Flurniveau errichtet werden kann und nicht das Niveau der höchsten erwünschten Sacklage aufweisen muß. Die Ausbildung des Ladetisches in dem Hubgerüst als zweiteilige Konstruktion ermöglicht eine Sackform bei der Aufgabe auf den schon bestehenden Sackstapel oder auf die Palette, bei der die gewünschte konkave Oberfläche des Sackstapels erreicht wird und damit eine gute Festigkeit des Sackstapels.

Eine Zentriervorrichtung über dem Ladetisch, welche die Säcke nicht bis zu einem gewissen Gegendruck verschiebt, sondern lediglich um ein bestimmtes vorgegebenes Maß, ermöglicht eine ebenfalls stauchdruckarme Behandlung der Säcke.

In den Unteransprüchen sind weitere vorteilhafte Ausgestaltungen eines automatischen Sackpalettierers beschrieben.

So ist beispielsweise ein einteiliger Ladetisch im Hubgerüst dann vorteilhaft, wenn besonders empfindliche Säcke palettiert werden sollen, d. h. Säcke mit einem besonders fließfähigen Inhalt, der eine sehr instabile Form des Sackes bewirkt oder bei Säcken, die einen schlechten Füllgrad aufweisen.

Exzentrische oder von der Kreisform abweichende Rollenformen können eine bewußte Schüttelbewegung auf die Säcke übertragen, so daß diese insbesondere im Eingangsbereich der Palettieranlage eine Vergleichmäßigung der Sackform erfahren.

Eine Dreheinrichtung für die unter dem Ladetisch befindliche und zu beladende Palette um 180° kann wünschenswert sein, wenn eine Verbundlage der einzelnen Sacklagen erzielt werden soll.

Es soll also eine automatische Sackpalettierungsanlage geschaffen werden, welche eine - möglichst schonende - und stauchdruckarme Förderung der Säcke bis zum Ladetisch ermöglicht, wobei zur Erzielung einer guten Stapelfestigkeit des Sackstapels auf der Palette eine bewußt herbeigeführte Stauchung der Säcke dann wünschenswert ist, wenn sie eine konkave Ausbildung der Oberfläche des Sackstapels erzielt.

Ein Ausführungsbeispiel einer automatischen Sackpalettierung ist in den Zeichnungen dargestellt. Dabei zeigt

Fig. 1 eine prinzipielle perspektivische Ansicht einer automatischen Sackpalettierung,

Fig. 2 eine Draufsicht auf Wende-, Querverteilungs- und Speicherbereich der Anlage von Fig. 1 und

Fig. 3 einen Querschnitt durch einen zweiteiligen Ladetisch der Anlage von Fig. 1 und 2 in drei Phasen der Beladung.

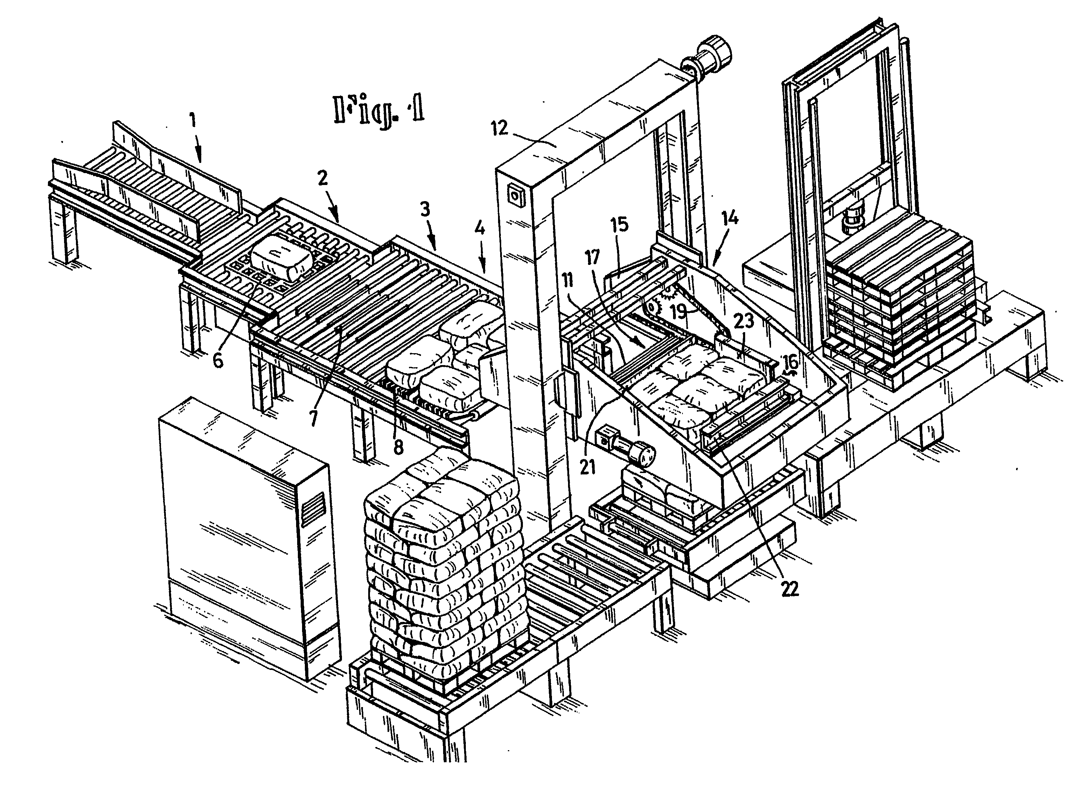

In Fig. 1 ist mit 1 eine Sackführung dargestellt, welche die Säcke einer Sackwendung 2 zuführt, von der aus sie zu einer Querverteilung 3 und weiterhin einem Sackspeicher 4 gelangen. Die Fördereinrichtung für die Säcke in diesen vier Anlagenteilen besteht aus einer Rollenbahn mit angetriebenen Rollen 5, die eine gummierte Oberfläche aufweisen können, um einen sicheren Transport der Säcke zu gewährleisten. Im Bereich der Sackführung 1 können die Rollen 5 oval oder exzentrisch ausgebildet sein, um die Säcke auf eine definierte Art durchzuschütteln und so eine Verteilung des Sackinhalts zu erreichen, die eine definierte einheitliche äußere Form der Säcke gewährleistet, auch wenn diese unterschiedlich gestaucht auf die Sackführung 1 aufgegeben wurden.

Im Bereich der Sackwendung 2 sind die Rollen 5 nicht durchgehend ausgebildet, sondern teilweise unterbrochen, so daß sich zwischen den einzelnen Rollenabschnitten ein Wendekorb 6 erstrecken kann, der in seiner abgesenkten Position mit seiner Oberfläche tiefer liegt als die Oberfläche der Rollen 5, und der vertikal verfahrbar ausgebildet ist, so daß er über den Wirkungsbereich der Rollen 5 hinaus angehoben werden kann. Weiterhin ist der Wendekorb 6 um seine Hochachse drehbar ausgebildet.

Er dient dazu, die von der Sackführung 1 kommenden Säcke hochzuheben und um 90° oder 180° zu drehen, so daß bei einer 90°-Drehung die Säcke zum Erzielen einer Verbundanordnung weitertransportiert werden können oder bei einer Drehung um 180° die Säcke mit ihrer Verschlußseite eine bestimmte Lage einnehmen können, wenn dies erforderlich ist. Durch Absenken des Wendekorbes 6 gelangen die Säcke wieder in den Eingriff mit den Rollen 5 und werden von der Sackwendung aus weitertransportiert.

Die Säcke gelangen nun in den Bereich der Querverteilung 3, indem zwischen den Rollen 5 ein Verteilerrechen 7 angeordnet ist, der ähnlich dem Wendekorb 6 heb- und senkbar ausgebildet ist, so daß er in seiner unteren Position den Kontakt der Säcke mit den Rollen 5 erlaubt, jedoch in seiner angehobenen Position die Säcke aus dem Kontakt mit den Rollen 5 bringt. Der Verteilerrechen 7 ist weiterhin zwischen den Rollen 5 quer zur Förderrichtung der Rollen verfahrbar, so daß die Säcke hochgehoben und innerhalb der Breite der Fördereinrichtung an verschiedenen Stellen wieder abgesetzt werden können.

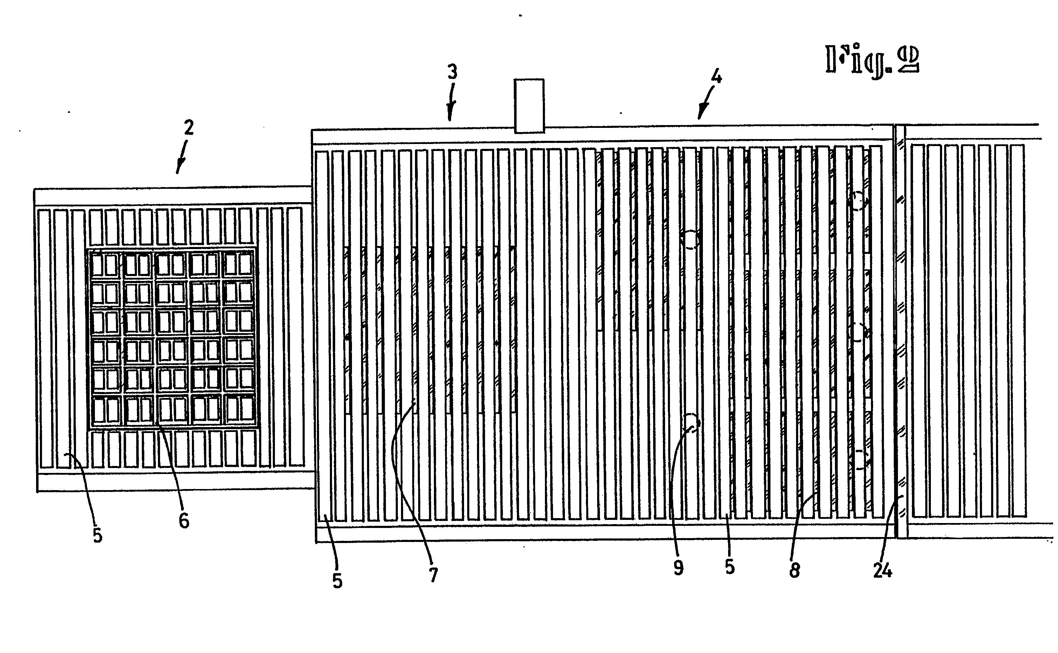

Im Bereich des Sackspeichers 4 werden mehrere gewendete und querverteilte Säcke zu einer Sacklage zusammengestellt. Dabei geht insbesondere aus Fig. 2 hervor, daß zwischen den Rollen 5 Speicherrechen 8 angeordnet sind, welche durch Lichtschranken oder andere Sensoren 9 betätigt werden. Diese Speicherrechen 8 haben die Aufgabe, die einzelnen Säcke hochzuheben und den Kontakt zwischen den Säcken und den Rollen 5 zu verhindern, sobald die Säcke auf ihre Position gelangt sind, die sie später in der Anordnung auf der Palette einnehmen sollen, wobei durch die Sensoren 9 angezeigt wird, daß ein Sack seine Position eingenommen hat.

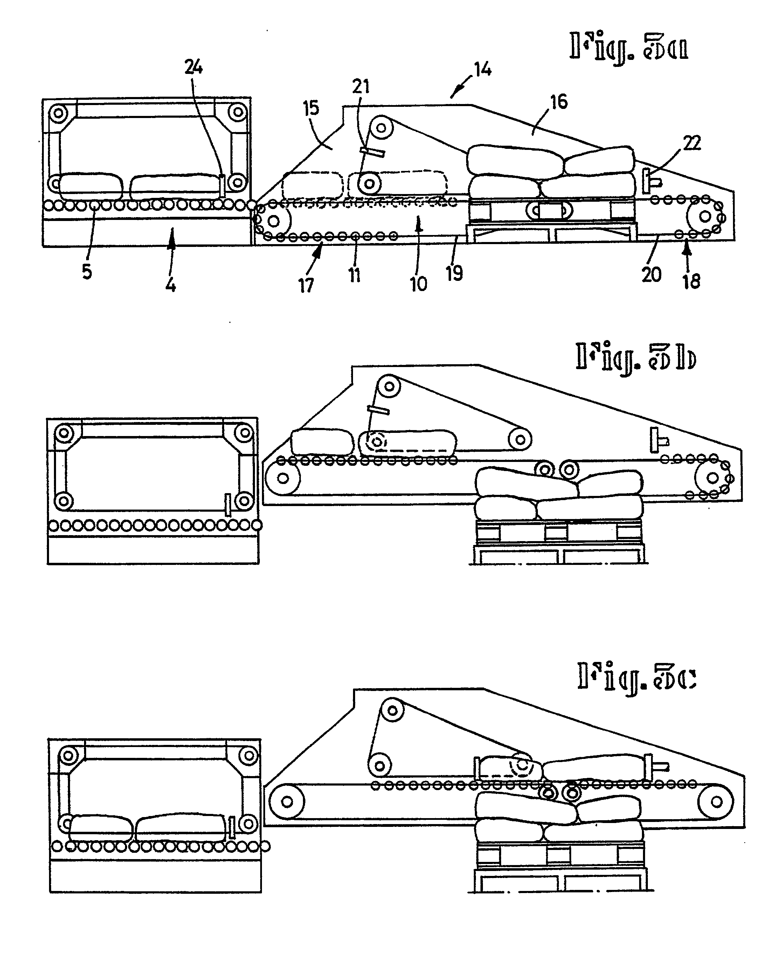

Es wird demnach vermieden, daß die Säcke nacheinander vor einen Anschlag od. dgl. gefördert werden und während sie an diesem anstoßen, sich die Fördereinrichtung unter den Säcken herbewegt, bis alle Säcke einer Sacklage zusammengestellt worden sind. Ein derartiger Anschlag ist in Form eines Sicherheitsanschlages 24 (Fig. 3) jedoch für den Fall vorgesehen, daß einer der Sensoren 9 oder einer der Speicherrechen 8 nicht ordnungsgemäß funktioniert. In dem Fall wird verhindert, daß ein oder mehrere Säcke hinter den Sackspeicher geraten und den weiteren ordnungsgemäßen Betriebsablauf stören. Im Normalfall haben die Säcke keinen Kontakt mit dem Sicherheitsanschlag 24.

Bei dem Ausführungsbeispiel werden Sacklagen zu je fünf Säcken zusammengestellt, wobei vier Speicherrechen für die Säcke vorhanden sind, jedoch fünf Sensoren 9. Dadurch wird erreicht, daß, wenn der fünfte Sack seine vorbestimmte Position eingenommen hat, die vier Verteilerrechen auf ein Signal des fünften Sensors abwärts gefahren werden, so daß die vier bisher angehobenen Säcke nun in Kontakt mit den Rollen 5 gelangen und daraufhin werden alle fünf Säcke gemeinsam durch die angetriebenen Rollen 5 weiterbefördert.

Durch die lineare Anordnung der einzelnen Anlagenteile hintereinander ohne einen winkligen Verlauf für die Förderrichtung der Säcke und dadurch, daß die Säcke beim Wenden, beim Verteilen und beim Speichern gehoben werden, statt geschoben oder gestaucht zu werden, ergibt sich eine bis hierhin unbeeinflußte Sackform.

Um die Säcke über die Palette zu bringen, werden sie zunächst von dem Sackspeicher 4 auf einen zweiteiligen, in Fig. 3 näher dargestellten Ladetisch 10 gefördert. Der Ladetisch 10 besteht aus Rollen 11, ähnlich den Rollen 5 und ist - wie aus Fig. 1 ersichtlich - innerhalb eines Hubgerüstes 12 in einem Hubrahmen 14 längsverfahrbar angeordnet. Dabei ist der Hubrahmen zwischen den Stützen des Hubgerüstes 12 so ausgebildet, daß er einen zum Sackspeicher 4 weisenden kleineren Rahmenabschnitt 15 und einen zur Palette hin weisenden größeren Rahmenabschnitt 16 aufweist. Nachdem die Säcke im Bereich des kleineren Rahmenabschnittes 15 auf dem Ladetisch 10 aufliegen (Fig. 3a), verfährt der Hubrahmen 14 nach oben, bis auf eine Höhe, von der aus die auf dem Ladetisch 10 liegenden Säcke eine neue Sacklage auf der Palette bilden können (Fig. 3b). Nachdem die Säcke auf dieser Palette abgelegt worden sind bzw. auf dem oberen Ende des Sackstapels, verfährt der Hubrahmen 14 wieder nach unten auf das Niveau der übrigen Anlagenteile, um eine neue Sacklage auf dem Ladetisch 10 aufzunehmen.

Die Funktion des Ladtisches 10 und der damit zusammenhängenden Anlagenteile wird im folgenden beschrieben: Ein erster Teil 17 des Ladetisches 10 ist aus den Rollen 11 aufgebaut und größer als ein zweiter Teil 18 des Ladetisches 10, der ebenfalls aus den Rollen 11 gebildet wird. Der erste Teil 17 weist dabei zwei Ketten 19 auf, zwischen denen sich die Rollen 11 erstrecken und der zweite Teil 18 weist zwei ähnliche, jedoch kürzere Ketten 20 auf, zwischen denen sich seine Rollen 11 erstrecken. Im Gegensatz zu den Rollen 5 sind die Rollen 11 nicht angetrieben und auch nicht ortsfest. Sie können ihre Lage dadurch verändern, daß die Ketten 19 und 20 verfahren werden. Der erste Teil 17 sowie der zweite Teil 18 des Ladetisches grenzen dabei über der Palette bzw. dem Sackstapel aneinander.

Die Rollen 11, die den ersten und zweiten Teil 17 und 18 des Ladetisches 10 bilden, erstrecken sich dabei nicht überall zwischen den Ketten 19 und 20, sondern nur auf einem gewissen Abschnitt zwischen diesen Ketten, wie dies in Fig. 3 und für die beiden Ketten 19 auch in Fig. 1 sichtbar wird. Der größere erste Teil 17 des Ladetisches 10 kann dabei eine komplette Sacklage aus dem Sackspeicher 4 übernehmen, wobei die beiden Teile 17 und 18 des Ladetisches 10 zunächst in ihrer in Fig. 3a und 3b dargestellten offenen Stellung angeordnet sind.

Die vom Sackspeicher 4 aus auf den Ladetisch zu geförderten Säcke berühren dabei eine der vorderen Rollen 11 des ersten Teiles 17 des Ladetisches 10 (durchgezogene Linien in Fig. 3a) und durch eine Lichtschranke oder einen ähnlichen nicht dargestellten Sensor beginnen in diesem Augenblick die Ketten 19 mit einer Synchrongeschwindigkeit mit den Säcken zu fahren und diese aufzunehmen, so daß schließlich die gesamte Sacklage auf dem ersten Teil 17 des Ladetisches 10 aufliegt (gestrichelte Linien in Fig. 3a). Dabei bewegen sich die Ketten 19 nur soweit, daß die vorderste der Rollen 11 nicht vor den Sackstapel auf der Palette stößt, der sich ggf. höher erstreckt als es der derzeitigen Position des Hubrahmens 14 und damit des Ladetisches 10 entspricht.

Der Hubrahmen 14 fährt anschließend in eine Höhe, von der aus die Sacklage auf dem Ladetisch 10 auf die Palette bzw. deren Sackstapel aufgegeben werden kann (Fig. 3b). Dazu werden die Ketten 19 und 20 so bewegt, daß die entsprechenden Rollen 11 aufeinanderzu fahren, so daß die beiden Teile 17 und 18 des Ladetisches im wesentlichen über der Mitte des Sackstapels aufeinandertreffen (Fig. 3c). Durch einen Schieber 21 werden nun die auf dem Ladetisch 10 befindlichen Säcke über den schon bestehenden Sackstapel bzw. über die Palette geschoben, so daß sie sich nun teilweise auf dem ersten Teil 17 und teilweise auf dem zweiten Teil 18 des Ladetisches befinden (Fig. 3c).

Die Säcke waren - wie aus den Fig. 1 und 3 im Bereich des Sackspeichers 4 ersichtlich - im Abstand voneinander positioniert. Um sie auf das vorgegebene Maß für die Palette zu bringen, sind oberhalb des Ladetisches 10 Zentriereinrichtungen vorgesehen, die aus dem Schieber 21 sowie aus einem ihm gegenüberliegenden zweiten Schieber 22 und zwei seitlichen Zentrierleisten 23 mit nicht dargestellten Antriebsmitteln bestehen.

Hier werden die Säcke bewußt geschoben, wobei das Verdichten der Sacklage jedoch nicht dadurch beendet wird, daß die Zentriereinrichtungen (21 bis 23) einen gewissen Druck erreichen, sondern sie verfahren die Säcke um ein bestimmtes vorgegebenes Maß. Ihre Steuerung erfolgt also längenabhängig und nicht druckabhängig. Dadurch können diese Zentriereinrichtungen (21 bis 23) so eingestellt werden, daß die Säcke nicht stark gegeneinanderstoßen, sondern daß sie lediglich von ihren Außenseiten her, nämlich von den Zentriereinrichtungen, gedrückt werden.

Es ist bekannt, daß die Säcke sich dort aufwölben, wo sie gestoßen oder geschoben werden. Dies bedeutet im vorliegenden Fall, wo die Säcke nicht aneinandergedrückt werden, daß sie sich nicht im mittleren Bereich der Sacklage aufbauchen oder aufwölben, sondern diese wird nur von ihren äußeren Bereichen her gedrückt, baucht sich also auch nur dort auf. Die gesamte Sacklage ist daher nicht kissenartig oder ballig in ihrem mittleren Bereich gewölbt, sondern an ihren Außenseiten. Dadurch wird eine insgesamt konkave Oberfläche des Sackstapels erreicht und eine gute Stapelfestigkeit erzielt.

Nach der Zentrierung der Sacklage fahren die beiden Teile 17 und 18 des Ladetisches 10 auseinander, indem die Ketten 19 und 20 die zwischen ihnen angeordneten Rollen 11 aus der in Fig. 3c dargestellten geschlossenen Stellung in die in Fig. 3a und 3b dargestellte offene Stellung zurückverfahren. Dadurch werden die auf dem Ladetisch 10 befindlichen Säcke als nun oberste Sacklage auf dem Sackstapel über der Palette abgelegt. Durch das Auseinanderziehen des Ladetisches nach zwei Seiten wird ebenfalls bewirkt, daß zumindest die zwei Randseiten der Sacklage, die an den Schiebern 21 und 22 anliegen, ebenfalls etwas voller ausgebildet werden, so daß die Ausbildung einer konkaven Oberfläche des Sackstapels hierdurch unterstützt wird.

Nachdem die beiden Teile 17 und 18 des Ladetisches 10 in ihre offene Stellung verfahren worden sind, weist der Hubrahmen 14 im Bereich oberhalb der Palette eine freie Zone auf, so daß sich der Hubrahmen 14 mit dem Ladetisch 10 wieder um den Sackstapel auf der Palette herum absenken kann, um eine neue Sacklage aus dem Sackspeicher 4 aufzunehmen.

Alternativ zu dem zweiteilig ausgebildeten Ladetisch 10 kann auch ein einteiliger Ladetisch vorgesehen sein, der dann im wesentlichen wie der größere erste Teil 17 des dargestellten Ladetisches 10 ausgebildet wäre. Ein einteiliger Ladetisch weist den Vorteil auf, daß kein Schieber 21 nötig wird, um die Sacklage von dem ersten Teil des Ladetisches auf den zweiten Teil zu schieben. Dies ist insbesondere dann von Vorteil, wenn empfindliche Säcke, d. h. mit einem besonders fließfähigen Inhalt oder mit einem schlechten Füllgrad, palettiert werden sollen. In diesen beiden Fällen nämlich reagieren die Säcke mit Verformungen sehr leicht auf ein Anschieben oder Anstoßen von außen. Der einteilige Ladetisch bewirkt allerdings keine konkave Oberfläche des Sackstapels.

Alternativ zu dem dargestellten Ausführungsbeispiel kann der Sackspeicher 4 auch in mehrere Rollenfelder unterteilt sein, die getrennt voneinander angetrieben werden. In dem Fall kämen keine Speicherrechen 8 zum Einsatz, sondern die Säcke würden auf den einzelnen Rollenfeldern positioniert, die dann abgeschaltet würden, wenn die Säcke ihre Lage erreicht haben. Sobald eine komplette Sacklage zusammengestellt worden ist, im dargestellten Ausführungsbeispiel etwa die Anordnung des Fünferverbundes, würden alle Rollenfelder angetrieben und dadurch würde die Sacklage auf den Ladetisch befördert werden können.

Um eine komplizierte Programmierung für die Sackwendung 2 und die Querverteilung 3 zu umgehen und die Ausbildung der Speicherrechen 8 einfach zu halten, kann die Palette auf einer um 180° drehbaren Vorrichtung angeordnet sein, so daß im Bereich des Sackspeichers 4 ein immer gleiches Muster einer Sacklage zusammengestellt wird, wobei der Verbund der einzelnen Sacklagen auf der Palette sich dadurch ergibt, daß die Palette nach jeder neuen Sacklage um 180° gedreht wird und die nächste Sacklage dementsprechend verbundartig auf die bestehenden Lagen aufgegeben wird.

**Patentansprüche**

1. Vorrichtung zum automatischen Palettieren von Säcken mit
   - einer Rollenbahn zum Fördern der Säcke,
   - Mitteln zum Wenden und Speichern der Säcke,
   - einem hinter der Sackwendung angeordneten Querverteiler für die Säcke, der quer zur Förderrichtung verfahrbar ist,
   - einer im wesentlichen linearen Anordnung der einzelnen Komponenten, sowie
   - einer Vorrichtung zum Anheben der Säcke beim Wenden über den Wirkungsbereich der Rollen,
   gekennzeichnet durch
   a) ein Magazin für Leerpaletten und einer Palettentransporteinrichtung,
   b) eine Anordnung der einzelnen Komponenten auf Flurniveau,
   c) angetriebene Rollen (5) in der Rollenbahn,
   d) Vorrichtungen zum Anheben der Säcke über den Wirkungsbereich der Rollen (5) beim Verteilen (Verteilerrechen 7) und Speichern (Speicherrechen 8),
   e) Kontrolleinrichtungen (Sensoren 9) im Bereich von und zusammenwirkend mit der Hebevorrichtung (Speicherrechen 8) im Bereich des Sackspeichers (4),

f) einen Ladetisch (10) in einem Hubgerüst (12), dessen Hebebereich zumindest von der Rollenbahn bis zur Höhe des gewünschten Sackstapels auf der Palette reicht und in dem der Ladetisch (10) längsverfahrbar angeordnet ist,

g) eine Zentriervorrichtung (Schieber 21, 22; Zentrierleisten 23) über dem Ladetisch (10), die die Säcke um ein vorgegebenes Maß verschiebt.

2. Vorrichtung nach Anspruch 1, dadurch gekennzeichnet, daß der Ladetisch (10) zweiteilig ausgebildet ist.

3. Vorrichtung nach Anspruch 1, gekennzeichnet durch einen einteiligen Ladetisch im Hubgerüst (12).

4. Vorrichtung nach einem oder mehreren der Ansprüche 1 bis 3, gekennzeichnet durch exzentrische oder nicht kreisrunde Rollen in der Rollenbahn, zumindest im Bereich vor der Sackwendung (2).

5. Vorrichtung nach einem oder mehreren der Ansprüche 1 bis 4, gekennzeichnet durch eine um 180° drehbare Drehvorrichtung für die unter dem Ladetisch (10) angeordnete Palette.

**Claims**

1. Apparatus for the automatic palletisation of bags, with
– a roller conveyor for conveying the bags,
– means for turning and storing the bags,
– a transverse distributor for the bags which is arranged behind the bag turning point and which is movable transversely relative to the conveying direction,
– an essentially linear arrangement of the individual components, and
– a device for lifting the bags, during turning, above the effective range of the rollers,
characterized by
a) a magazine for empty pallets and a pallet transport device,
b) an arrangement of the individual components at floor level,
c) driven rollers (5) in the roller conveyor,
d) devices for lifting the bags above the effective range of the rollers (5) during distribution (distributor rakes 7) and storage (storage rakes 8),
e) monitoring devices (sensors 9) in the region of and interacting with the lifting device (storage rakes 8) in the region of the bag store (4),
f) a loading table (10) in a lifting structure (12), the lifting range of which reaches at least from the roller conveyor to the height of the desired bag stack on the pallet and in which the loading table (10) is arranged so as to be longitudinally movable,
g) a centring device (slides 21, 22; centring fences 23) located above the loading table (10) and shifting the bags a predetermined amount.

2. Apparatus according to Claim 1, characterized in that the loading table (10) is of two-part design.

3. Apparatus according to Claim 1, characterized by a one-part loading table in the lifting structure (12).

4. Apparatus according to one or more of Claims 1 to 3, characterized by eccentric or non-circular rollers in the roller conveyor, at least in the region in front of the bag turning point (2).

5. Apparatus according to one or more of Claims 1 to 4, characterized by a rotary device rotatable through 180° for the pallet arranged under the loading table (10).

**Revendications**

1. Dispositif de palettisation automatique de sacs comportant:
– un transporteur à rouleaux pour transporter les sacs,
– des moyens pour faire faire un demi-tour aux sacs et pour les accumuler,
– un dispositif de répartition latérale des sacs, qui est disposé après le retournement des sacs et qui est déplaçable transversalement à la direction de transport,
– une disposition sensiblement linéaire des composants individuels, de même qu'
– un dispositif de soulèvement des sacs lors du retournement au-dessus de la zone d'action des rouleaux,
caractérisé par
a) un magasin de palettes vides et un dispositif de transport des palettes,
b) une disposition des composants individuels au niveau du sol,
c) des rouleaux commandés (5) dans le transporteur à rouleaux,
d) des dispositifs de soulèvement des sacs au-dessus de la zone d'action des rouleaux (5) lors de la répartition (râteau répartiteur 7) et de l'accumulation (râteau accumulateur 8),
e) des dispositifs de contrôle (détecteurs 9) dans la zone du, et coopérant avec le, dispositif de soulèvement (râteau accumulateur 8) dans la zone de l'accumulateur de sacs (4),
f) une table de chargement (10) dans un cadre de levage (12), dont la zone de soulèvement va au moins du transporteur à rouleaux jusqu'à la hauteur de l'empilement de sacs souhaité sur la palette, et dans lequel la table de chargement (10) est montée à déplacement longitudinal,
g) un dispositif de centrage (coulisseaux 21, 22; barres de centrage 23) au-dessus de la table de chargement (10), qui déplace les sacs d'un degré.

2. Dispositif selon la revendication 1, caractérisé par le fait que la table de chargement (10) est réalisée en deux parties.

3. Dispositif selon la revendication 1, caractérisé par une table de chargement en une partie dans le cadre de levage (12).

4. Dispositif selon l'une ou plusieurs des revendications 1 à 3, caractérisé par des rouleaux excentriques ou non-circulaires dans le transporteur à rouleaux, au moins dans la zone précédant le retournement des sacs (2).

5. Dispositif selon l'une ou plusieurs des revendications 1 à 4, caractérisé par un mécanisme vireur, capable de pivoter de 180°, pour la palette disposée au-dessous de la table de chargement (10).

Fig. 1

Fig. 2

EP 0 257 447 B1

Fig. 5a

Fig. 5b

Fig. 5c